# EUROPÄISCHE PATENTSCHRIFT

(11) **EP 1 903 900 B1**
(45) Veröffentlichungstag und Bekanntmachung des Hinweises auf die Patenterteilung: **10.07.2019**
(21) Anmeldenummer: 06753778.7
(22) Anmeldetag: 22.05.2006
(51) Int. Cl.: A43C 15/16, B33Y 80/00, B33Y 10/00, B29C 64/153, B29C 64/10, A43B 13/18, A43D 1/02, A43B 13/22

(54) **SCHUHSOHLE UND HERSTELLUNGSVERFAHREN DAFÜR**
SHOE SOLE AND METHOD FOR THE PRODUCTION THEREOF
SEMELLE DE CHAUSSURE ET PROCÉDÉ DE PRODUCTION CORRESPONDANT

(30) Priorität: 20.05.2005 DE 102005023473
(43) Veröffentlichungstag der Anmeldung: 02.04.2008
(73) Patentinhaber: Junior, Volker, 82166 Gräfelfing (DE)
(72) Erfinder: LEVER-O'KEEFE, Greg Beeches Farm, The Twist, HP23 6DU, (GB); DOWDING PRIOR, Trevor, Loughton, Essex IG 10 4 DS (GB)
(74) Vertreter: Beetz & Partner mbB
(86) Internationale Anmeldenummer: PCT/EP2006/004845
(87) Internationale Veröffentlichungsnummer: WO 2006/122832

(56) Entgegenhaltungen:
- EP-A2- 0 426 363
- WO-A-01/67947
- DE-A1- 4 404 695
- US-A- 3 696 456
- US-A- 5 678 448
- US-A1- 2002 158 358
- US-A1- 2005 071 935

## Beschreibung

Die Erfindung betrifft eine Schuhsohle und ein Herstellungsverfahren hierfür nach den Oberbegriffen der unabhängigen Patentansprüche.

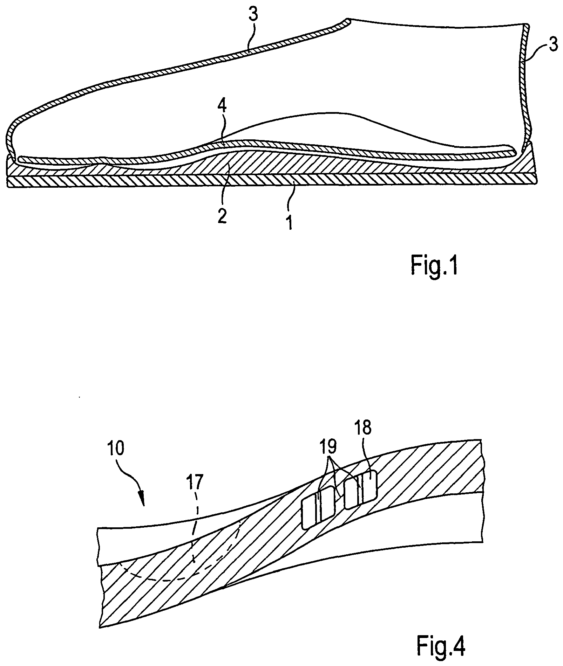

Die überwiegende Zahl der Schuhe wird in Massenfertigung so gefertigt, dass die entstehenden Schuhe durchschnittlichen Schuhgrößen- und formen gerecht werden. In den meisten Fällen führt dies zu hinreichenden Ergebnissen betreffs Komfort und orthopädische Erfordernisse. Fig. 1 zeigt schematisch den Aufbau eines herkömmlichen Schuhs: 1 ist die Laufsohle, also der dem Untergrund zugewandte Teil des Sohle, 2 die Brandsohle, also der dem Trägerfuß zugewandte Teil der Sohle, 3 der Oberschuh und 4 eine möglicherweise separat vorhandene Einlage. Häufig sind Brandsohle 1 und Laufsohle 2 getrennte Bauelemente. Es gibt aber auch mehr oder minder komplexe Schuhe, bei denen Brand- und Laufsohle nicht mehr separat erkennbar sind, sondern einstückig hergestellt wurden, so dass die Unterscheidung entfällt. Die Innenseite der Brandsohle weist ein mehr oder minder stark ausgebildetes Fußbett auf, also eine Form, die in gewissem Umfang orthopädischen Erfordernissen gerecht wird (Druckverteilung, Stützung des Fußgewölbes ...). In Standardschuhen sind diese Fußbetten entsprechend Durchschnittswerten geformt.

Wenngleich herkömmliche Schuhe in den meisten Fällen den praktisch herrschenden Anforderungen gerecht werden, gibt es doch Einsatzgebiete, in denen besser passende Schuhe wünschenswert sind. Ein erstes Einsatzgebiet sind medizinisch-orthopädische Anwendungen, in denen bestimmte Effekte entweder erreicht oder vermieden werden sollen. Ein zweites Anwendungsgebiet ist der Sport bzw. insbesondere Leistungssport, etwa der Fußball, wo kurzfristig während des Spiels und besonders langfristig über die Jahre hinweg besondere Anforderungen und Beanspruchungen der Füße der Spieler folgen. Ein drittes Anwendungsgebiet ist der Bereich besonderer Komfortwünsche von Trägern.

Grundsätzlich gibt es in gewissem Umfang Maßanfertigungen. Es werden schon seit langer Zeit individuell gefertigte Einlagen angeboten, die in Standardschuhe eingelegt werden. Die Einlagen sind nach Maßgabe der Bedürfnisse des konkreten Trägers gestaltet, werden in herkömmliche Schuhe eingelegt und versehen dort den gewünschten Zweck. Es sind auch maßgeschneiderte Alltagsschuhe erhältlich. Hier wird der Schuh (Sohle, Oberschuh) individuell für die jeweiligen Träger gefertigt. In gewissem Umfang können solche Schuhe an die individuellen Gegebenheiten des jeweiligen Trägers angepasst werden. Hohen Ansprüchen wird aber auch diese Technik nicht gerecht.

Die US 2002/0158358 A1 beschreibt ein Schuhwarenherstellungssystem. Es wird hierbei die Fußsohle vermessen, und die gewonnenen Daten werden zur Einstellung einer veränderlichen Gußform verwendet. Die DE 4404695 A1 und die WO 2001/67947 A1 beschreiben Verfahren zur Einlagenfertigung.

Die US 2005/0071935 A1 beschreibt ein Verfahren zur Leistenfertigung. Die EP 0426363 A2 beschreibt eine Schichtbaumaschine und ein Schichtbauverfahren
Aufgabe der Erfindung ist es, eine gut an Trägerbedürfnisse angepasste Schuhsohle und ein Herstellungsverfahren hierfür anzugeben.

Diese Aufgabe wird mit den Merkmalen der unabhängigen Patentansprüche gelöst. Abhängige Patentansprüche sind nach bevorzugter Ausführung folgender Erfindung gerichtet.

Eine Schuhsohle für einen Schuh eines Trägers ist erfindungsgemäß nach Maßgabe individueller biometrischer Daten seines zukünftigen Trägers ausgebildet. Solche biometrischen Daten umfassen die dreidimensionale Form des Fußes und ggf. weitere Daten wie die vorzugsweise dreidimensionale Form des Fußskeletts oder von Teilen davon, das Gewicht und die Größe des Trägers, die Gewichtsverteilung über der Sohle des Trägers oder Daten, die die Geh- und/oder Laufweise des Trägers beschreiben. Teile oder all diese Daten werden vor Sohlenfertigung erfasst, und nach ihrer Maßgabe werden Entwurfsdaten für die Sohle und/oder den Oberschuh und/oder die Leisten erstellt. Nach Maßgabe der Entwurfsdaten wird dann der Schuh hergestellt. Die erfindungsgemäße Schuhsohle bildet die Brandsohle und die Laufsohle einstückig.

Nach Maßgabe der gewonnenen biometrischen Daten können die Position und/oder die Ausrichtung von nachgiebigen Bereichen die Position und/oder die Ausrichtung eines oder mehrerer fester Bereiche, und/oder die Profilierung eines oder mehrerer nachgiebiger Bereiche, und/oder das Fußbett und/oder die Absatzhöhe und/oder die Anzahl, Position, Form, Ausrichtung und Höhe von Stollen einer Schuhsohle festgelegt werden.

Die erfindungsgemäße Schuhsohle wird durch ein Rapid-Prototyping-Fertigungsverfahren (RP-Verfahren) hergestellt sein. Sie wird durch ein Schichtbauverfahren gefertigt. Lasersintertechnik kann eingesetzt werden.

Rapid-Prototypingverfahren sind Fertigungsverfahren, die überwiegend in der Herstellung von Prototypen eingesetzt werden, da sie schnell zum gewünschten Produkt führen und für kleine Losgrößen vergleichsweise kostengünstig sind. Dies beruht vor allem darauf, dass mindestens ein formgebender Schritt innerhalb einer Rapid Prototyping Prozesskette dadurch gekennzeichnet ist, daß aus 3D CAD-Daten eines Objektes direkt die Fertigungssteuerungsinformation zur Erzeugung dieses Objektes abgeleitet wird.

Schichtbauverfahren sind Fertigungsverfahren die dadurch gekennzeichnet sind, dass das zu erzeugende Objekt Schicht für Schicht gefertigt wird. Schichtbauverfahren arbeiten üblicherweise generativ, dass heißt es wird das zu fertigende Objekt durch hinzufügen von Material erzeugt. Auf unterschiedliche Weise unterscheidet dann das jeweilige Fertigungsverfahren, wo Material aufgetragen oder/und verfestigt werden soll und wo nicht. Heute marktübliche Beispiele sind LOM (Layer Object Manufacturing), Stereolithographie, Lasersintertechnik, SLM (Selective Laser Melting) oder FDM (Fused Deposition Modeling).

Durch das schichtweise Vorgehen bieten diese Verfahren teilweise die Möglichkeit, quasi innenliegende Funktionalitäten zu erzeugen, die mit anderen Fertigungsverfahren nicht möglich sind. Außerdem können lokal unterschiedliche Eigenschaften in einem Fertigungsprozess erzeugt werden.

Lasersintertechnik ist ein Schichtbauverfahren, das als Werkstoff Pulver (Feststoff) oder eine Kombination aus festen und nicht festen Komponenten (Flüssigkeiten, Gas) verwendet. Mit Hilfe von Wärmeenergie, vorzugsweise eingebracht durch einen Laser, wird selektiv der Werkstoff verfestigt. Kennzeichnend für das Lasersintern ist dabei, dass ein ursprünglich fester, pulverförmiger Ausgangswerkstoff nach dem Ablauf der Phasenübergänge fest -> nicht fest (flüssig oder/und gasförmig) -> fest die Matrix- Komponente des Endproduktes ausmacht. (Anders als bei der Stereolithographie, die mit Harzen arbeitet, die mit festen Partikeln gefüllt sind. Hier wird die Matrix des Endproduktes durch das Harz gebildet, das im Fertigungsprozess vernetzt und dadurch von der flüssigen in die feste Phase übergeht.) Beim Lasersintern kann innerhalb einer Schicht auch mit unterschiedlichen Werkstoffen gearbeitet werden, die gezielt in unterschiedlichen Bereichen der Schicht deponiert werden können. Auch dadurch lassen sich lokal unterschiedliche Bauteileigenschaften erzeugen.

Ein Verfahren zum Herstellen einer Schuhsohle nach der Erfindung weist das Erfassen biometrischer Daten des Trägers wie oben beschrieben auf, das Erstellen von Entwurfsdaten für die Sohle nach Maßgabe der erfassten biometrischen Daten und das Herstellen der Schuhsohle nach Maßgabe der Entwurfsdaten in einem Prototyping-Verfahren. Insbesondere Sohle und/oder Leisten können mit einer der oben beschriebenen Arbeitstechniken hergestellt werden.

Das so beschriebene Verfahren kann iterativ verwendet werden. Im Leistungssport halten Schuhe häufig weniger als ein halbes Jahr. Es sind dementsprechend - und auch wegen Verletzungen - häufig neue Schuhe anzufertigen, so dass durch die jeweils neu angefertigten Schuhe den jeweils herrschenden Umständen und Verläufen Rechnung getragen werden kann.

Nachfolgend werden bezugnehmend auf die Zeichnungen einzelne Ausführungsformen der Erfindung beschrieben, es zeigen:
Fig. 1 einen allgemeinen, herkömmlichen Schuh,
Fig. 2 eine Sohle, wie sie erfindungsgemäß hergestellt sein kann, in Seitenansicht,
Fig. 3 schematisch eine Sohle von unten mit bestimmten Merkmalen darauf,
Fig. 4 eine Detailansicht einer Sohle zur Erläuterung mehrerer Ausführungsformen,
Fig. 5 den Ablauf des Entwurfs und Baus eines Schuhs,
Fig. 6 eine weitere Ausführungsform einer erfindungsgemäßen Sohle,
Fig. 7 eine weitere Ausführungsform einer erfindungsgemäßen Sohle,
Fig. 8 eine weitere Ausführungsform der erfindungsgemäßen Sohle,
Fig. 9 vorhandene Datenstrukturen,
Fig. 10 ein Verfahren zum Erstellen oder Verändern von Entwurfsregeln, und
Fig. 11 eine Ausführungsform eines Stollens einer Sohle.

Fig. 2 zeigt in Seitenansicht eine Schuhsohle, die einstückig die Brandsohle und die Laufsohle eines Schuhs bildet. Gezeigt ist die Sohle eines typischen Fußballschuhs. Die Sohle weist links eine Mulde 5 für den Ballen auf, in der Mitte eine Stütze 6 für das Fußgewölbe und links eine Mulde 7 für die Ferse. 8 kennzeichnet verschiedenen Stollen, die nach unten gerichtet über die Sohle verteilt sind. Die Sohle 10 ist ein Formkörper, der nach Maßgabe von Fertigungsdaten hergestellt wurde. Das Fertigungsverfahren ist ein Schichtbauverfahren beispielsweise mit Lasersintertechnik. Die Entwurfsdaten beschreiben die Sohle 10 vorzugsweise vollständig in digitaler Form und werden so dem Herstellungsvorgang zur Verfügung gestellt.

Die Entwurfsdaten für die Sohle 10 werden nach Maßgabe biometrischer Daten des Trägers erstellt. Diese Entwurfsdaten können praktisch jedes Merkmal eines Schuhs und damit verbunden Merkmale an Leisten, Sohle und Oberbau bzw. Oberschuh betreffen, besonders aber eines oder mehrere der folgenden vorzugsweise nach Maßgabe biometrischer Daten des Trägers ausgestalteten Merkmale:
- Die Position und/oder die Ausrichtung und/oder Verlauf eines oder mehrerer nachgiebiger Bereiche in der Schuhsohle. Schuhsohlen haben idealerweise nachgiebige Bereiche, die in ihrer Lage und Ausrichtung auf die Anatomie des Trägers abgestimmt sind. Es gibt hier zwar Durchschnittswerte. Die individuellen Gegebenheiten streuen aber vergleichsweise stark, so dass die Ausrichtung nachgiebiger Bereiche nach Maßgabe der Anatomie des Trägers sinnvoll ist. Idealerweise ist eine Sohle, insbesondere eine Schuhsohle im hinteren Bereich (vom Ballen nach hinten) vergleichsweise starr, während sie nach vorne federnd nachgiebiger wird. Idealerweise folgt ein nachgiebige Bereich beispielsweise in Querrichtung der Sohle in etwa dem Verlauf des Zehenansatzes. Nachgiebige Bereiche können auch über vergleichsweise festen Bereichen im oberen Bereich der Sohle liegen und so lokal als Dämpfung wirken. Es können so unter anderem Grad der Biegung der Sohle, Richtung der Biegung oder Widerstand der Sohle beim Biegen auf die individuellen Gegebenheiten angepasst werden
- Die Position und/oder die Ausrichtung eines oder mehrer fester Bereiche. Feste Bereiche sind solche, die nicht oder nur geringfügig verbiegbar sind. Vom Ballen aus nach hinten kann eine Schuhsohle in den meisten Fällen vergleichsweise fest und unnachgiebig gestaltet sein. Gleiches gilt für den Bereich der Zehen vorne. Zwischen diesen festen Bereichen kann der oben schon erwähnte nachgiebige Bereich liegen.
- Die Profilierung eines nachgiebigen Bereichs. Es kann sinnvoll sein, einen nachgiebigen Bereich nicht als punktuell wirkendes Gelenk anzusehen, sondern als eine über eine Strecke verteilte Nachgiebigkeit. Es kann ein Nachgiebigkeitsprofil über einer Strecke eingestellt werden. Wenn hier bestimmte Verläufe und Profile gewünscht sind, können diese über geeignete Maßnahmen eingestellt und an die individuellen Gegebenheiten angepasst werden.
- Das Fußbett. Das Fußbett ist die der Sohle des Trägers zugewandte Oberfläche der Sohle 10. Ausgangspunkt für die Formgebung des Fußbetts kann die dreidimensionale Form der Fußsohle des Trägers sein. Das Fußbett der Sohle muss die Fußform des Trägers aber nicht identisch nachbilden. Es können hier durchaus auch bestimmte definiert abweichende Verteilungen der Formgebung gewünscht sein und eingestellt werden, wie der Winkel zwischen Vorderfuss und Fersenboden oder ein besonderer Verlauf der Druckbeanspruchung durch die Fußsohle während der Benutzung.
- Die Absatzhöhe und die Form des Absatzes und damit die Position und Unterstützung der Ferse. Breite, Höhe und Form des Absatzes bestimmen stark die Gehweise des Trägers des Schuhs. Diese Parameter können nach Maßgabe biometrischer Daten und auch nach Maßgaben gewünschter Effekte eingestellt werden.
- Bei Sportschuhen die Anzahl, Größe, Form und Ausrichtung der Stollen oder Spikes, ihre jeweilige Position und ihre jeweilige Höhe. Auch die genannten Parameter können nach Maßgabe biometrischer Daten gewählt werden.
- Dämpfung und Federung durch die und in der Sohle. Durch das Einbringen von Funktionselementen wie beispielsweise Federn, Dämpfern oder Gleitzonen kann die mechanische Antwort der Sohle auf die Belastung während der Benutzung auf die individuellen Gegebenheiten des Trägers angepasst werden.
- Je nach Schuhart und Funktionsweise, Lage, Verlauf, Länge und Gestaltung des Schließ- bzw. Schnürbereiches.

Unter "biometrische Daten" im obigen Sinne werden auch Daten verstanden, die gewünschte zukünftige Effekte bezüglich der Physis des Schuhträgers widerspiegeln.

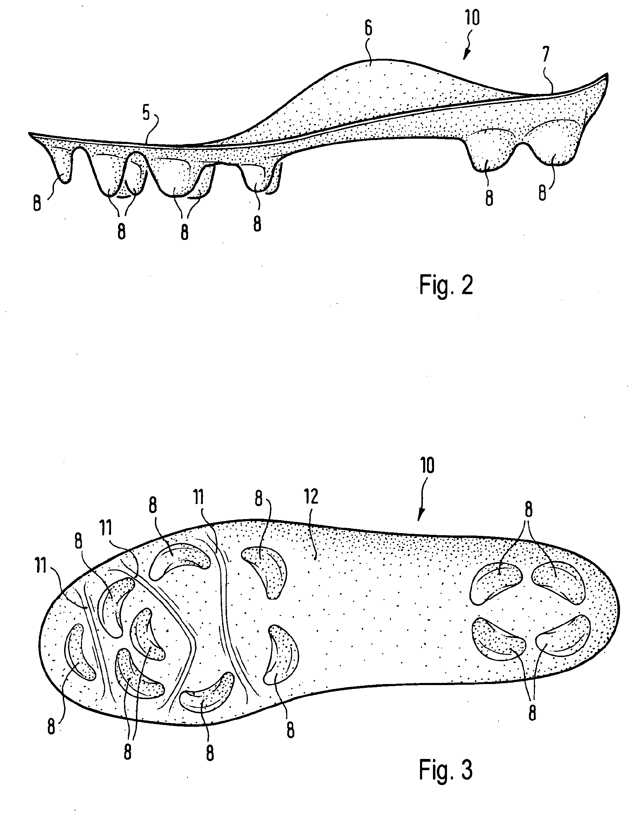

Fig. 3 zeigt schematisch von unten eine erfindungsgemäße Sohle. 11 symbolisiert einen nachgiebigen Bereich, 12 einen vergleichsweise festen Bereich und 13 auch eher feste Bereiche. Erfindungsgemäß kann beispielsweise die Position und räumliche Ausrichtung des nachgiebigen Bereichs 11 nach Maßgabe biometrischer Daten bestimmt werden. 8 symbolisiert die Stollen des Schuhs, deren Position und auch jeweilige Höhe nach Maßgabe biometrischer Daten bestimmt werden kann.

Folgende biometrische Daten können erfasst und berücksichtigt werden:
- vorzugsweise dreidimensional der Fuß oder Teile hiervon, insbesondere das Fußgewölbe, aber auch Zehen, Spann, Ferse, Achillessehne und Knöchel und daraus abgeleitete Grössen.
- vorzugsweise dreidimensional das Fußskelett oder Teile hiervon und daraus abgeleitete Größen. Abgeleitete Größen sind beispielsweise Längenverhältnisse der Knochen, besonders die Stellung zueinander wie die Längenverhältnisse der Mittelfußknochen und der Zehenknochen zwischen dem ersten und dem zweiten Zeh. Es zeigen sich dann eindeutig die Lage der Gelenke, ggf. Anomalien und ähnliches, so dass dies beim Bau des Schuhs berücksichtigt werden kann.
   Unter anderem können erfasst und berücksichtigt werden:
   ∘ die Länge des Fußes, die Höhe der Zehen, der Fersen-Ballen-Abstand
   ∘ der Umfang des Fußes gemessen
      ▪ vom hintersten Punkt der Ferse um den Übergang zwischen Bein und Fuß (wo der Strecker der großen Zehe hervortritt)
      ▪ an den Gelenken der Mittelfußknochen
      ▪ an den Zehen
   ∘ die Lage Mittelfußknochen, besonders die Lage der Köpfe des ersten und fünften Mittelfußknochens
   ∘ Die Längenverhältnisse zwischen dem ersten und zweiten Zeh und dem ersten und zweiten Mittelfußknochen
   ∘ die Lage des jeweils am weitesten herausragenden Punktes
      ▪ der zweiten Zehe und der fünften Zehe
      ▪ der Ferse
      ▪ des inneren Knöchels und des äußeren Knöchels
      ▪ die Lage des am tiefsten liegenden Punktes des inneren und äußeren Knöchels
   ∘ die Lage des Punktes, an dem die Achillessehne in das Fersenbein übergeht.
   ∘ die Lage des tiefsten Punktes des Kahnbeins
   ∘ die Lage des Knochenfortsatzes des fünften Mittelfußknochens
- Gewicht, Größe oder Längenverhältnisse der Beine des Trägers. Es handelt sich hierbei um Parameter, die die Last bestimmen, die der Schuh und der Fuß zu tragen haben und die die Beanspruchung des Bewegungsapparates beeinflussen: Die Beanspruchung kann durch geeignete Schuhgestaltung optimiert werden. Dazu kann erfasst und berücksichtigt werden:
   ∘ das Gewicht des Trägers
   ∘ die Beinlängen des Trägers
      ▪ vom Fuß zur Hüfte, vom Fuß zum Kniegelenk, vom Kniegelenk zur Hüfte
   ∘ das Skelett von Fuß und Bein bis zur Hüfte
   ∘ Symmetrie zwischen rechtem und linkem Fuß bzw. Bein
- Daten, die die natürliche Beweglichkeit der Gelenke des Trägers beschreiben, die Beweglichkeit der Füße und von Teilen der Füße, sowie ihre Stellung in Bezug auf die Beine (Unterschenkel). Das optimierte Schuhdesign orientiert sich auch an diesen individuellen Gegebenheiten. Dazu kann erfasst und berücksichtigt werden:
   ∘ die Beweglichkeit des Fußes um den Knöchel (Art, Ausmaß und Richtung), Die maximale Auslenkung des Fußes begrenzt durch die Beweglichkeit des Fußgelenkes
   ∘ Winkel zwischen vorderem und hinterem Fuß
   ∘ Beweglichkeit der ersten und des fünften Gelenkes zwischen Mittelfußknochen und Zehenknochen gegenüber den Gelenken des 2.-4.
   ∘ Verhältnisse (Lage, Orientierung, Winkel) der Unterschenkel, der Knöchelgelenke und der Füße des Trägers, in durch den orthopädisch geschulten Fachmann eingestellter optimaler Standposition, sowie Höhe und Form etwaiger Unterlagen, die für diese Korrektur erforderlich sein können.
   ∘ Verhältnisse (Lage, Orientierung, Winkel) der Unterschenkel, der Knöchelgelenke und der Füße des Trägers im Stand in einer vom Träger gewählten entspannten Position
   ∘ Asymmetrien zwischen dem rechten und dem linken Fuß bezüglich Beweglichkeit ohne Belastung und im Bewegungsablauf beim Gehen und/oder Laufen.
   ∘ Bewegung der gedachten Verbindungslinie zwischen der Spitze des Fersenbeins (am Boden) und dem Kopf des Mittelfußknochens der großen Zehe einerseits und der kleinen Zehe andererseits
   ∘ Beweglichkeit und maximaler Auslenkungswinkel des Gelenkes zwischen erstem Mittelfußknochen und Zehenknochen in entspannter Haltung (liegend)
   ∘ Beweglichkeit und maximaler Auslenkungswinkel der großen Fußzehe gegenüber der Fußsohle (gleiches Gelenk wie oben) im Stehen
   ∘ Bewegungsfreiheit des Fußes, die durch die Achillessehne und die Wade bestimmt werden. Beweglichkeit des Fuß im Stehen gegen den Widerstand der Achillessehne und der Wadenmuskulatur
- Gewicht und Gewichtsverteilung des Trägers über dessen Sohle. Es kann hier vermessen werden, wie sich das Gesamtgewicht des Trägers über dessen Fußsohle verteilt. Dies kann statisch oder auch dynamisch bestimmt werden. Im Einzelnen können die folgenden biometrischen Daten mit und ohne Wechselwirkung mit Schuhwerk beim Gehen oder Laufen erhoben werden und bei der Entwurfserstellung einfließen:
   ∘ Die Druckverteilung unter der Sohle (jedem Punkt der Sohle) zu jedem Zeitpunkt des Bodenkontaktes in dem jeweiligen Fuß.
   ∘ Lage des Druckzentrums bei längerer Bewegung
   ∘ Bewegung der Druckmaxima durch den Fuß während der Bewegung (laufen und gehen)
   ∘ Die Belastung (Höhe der Krafteinwirkung)des Fußes zu jedem Zeitpunkt des Bodenkontaktes und der Kraftverlauf durch den Fuß.
   ∘ Art und Geschwindigkeit der Gewichtsverlagerung von links nach rechts und von vorne nach hinten
- weitere Daten, die die Geh- und/oder Laufweise des Trägers beschreiben. Es gibt verschiedene typische Laufarten. Manche Leute knicken beispielsweise eher nach innen ab, andere eher nach außen. Manche laufen eher auf der Außenkante, andere eher auf der Innenkante. Dies kann durch geeignete Daten beschrieben werden und bei der Gestaltung insbesondere der Sohle berücksichtigt werden. Dazu zählen unter anderem jeweils in Gehen und Laufen, mit und ohne Schuh:
   ∘ die Winkel zwischen Boden und Ferse, sowie zwischen Hüfte, Knie, Knöchel und Gelenk zwischen erstem Mittelfußknochen und großer Zehe bei ersten Bodenkontakt, in der Mittelposition, wenn die Ferse den Boden verlässt und wenn die große Zehe den Boden verlässt
- Subjektive und objektive Angaben des Benutzers während der Zeit der Benutzung früherer Schuhe, insbesondere
   ∘ Tragekomfort zu Beginn der Benutzung, nach wenigen Minuten und der Verlauf bis zum Ende.
   ∘ Typische Dauer der Benutzung
   ∘ Typische Ruhezeit nach der Benutzung
   ∘ Veränderungen über einen längeren Zeitraum
- Daten, die gewünschte zukünftige Effekte insbesondere bezüglich der Physis des Schuhträgers widerspiegeln.

Die Entwurfsdaten insbesondere der Sohle können nach Maßgabe eines oder mehrerer dieser Daten gestaltet werden.

Die genannten biometrischen Daten werden vorzugsweise digital erfasst und dem Entwurfsprozess zur Verfügung gestellt. Das Entwurfsverfahren selbst weist die Erfassung der biometrischen Daten auf sowie nach Maßgabe der so erfassten Daten das Erstellen von Entwurfsdaten für Schuhsohle. Das Erstellen der Entwurfsdaten kann das völlig neue Entwerfen einer Konstruktion ausgehend von den erfassten biometrischen Daten und sonstigen Randbedingungen aufweisen und/oder das Modifizieren existierender Daten und/oder das Zusammenführen geeigneter einzelner Elemente (etwa Grundform plus nachgiebige Bereiche plus Stollen). Mit den Entwurfsverfahren wird der digitale Entwurf für eine einstückige Schuhsohle entworfen, die dann nach Maßgabe der Entwurfsdaten gefertigt wird.

Bei der Herstellung der Sohle nach Maßgabe der erstellten Entwurfsdaten kommen Schichtbauverfahren zum Einsatz. Bei einem Schichtbauverfahren besteht die Möglichkeit, quasi im inneren der Sohle Funktionselemente wie Federn, Dämpfer oder Führungselemente wie beispielsweise Schienen zu fertigen. Weiterhin kann das Verhalten durch die direkte Fertigung von innen liegenden Holräumen beeinflusst werden. Bei der Lasersintertechnik, einem Schichtbauverfahren, können zusätzlich Materialparameter ortsabhängig eingestellt werden, so dass nicht nur an einem bestimmten Ort Material vorhanden ist oder nicht, sondern stattdessen an bestimmten Orten das Material eine Eigenschaft haben kann, die anders ist als an anderen Orten. Es können auf diese Weise beispielsweise nachgiebige Bereiche eingeformt werden. Dies kann geschehen, indem beispielsweise die Laserparameter bei der Lasersintertechnik so verändert werden, dass das Material in bestimmter Weise aushärtet bzw. versintert, beispielsweise nicht vollständig, sondern nur teilweise. Eine lokal unterschiedliche Bauteileigenschaft kann in der Lasersintertechnik auch dadurch erzielt werden, dass unterschiedliche Werkstoffe ortsabhängig während ein und desselben Bauprozesses verarbeitet werden.

Fig. 4 zeigt einen Querschnitt durch einen Bereich der Sohle 10. Die Schnittfläche hat eine vergleichsweise homogene Dicke, was sich aus biometrischen Randbedingungen (z. B. Fußbett) ergeben kann. Wenn man gleichwohl nachgiebige Bereiche einstellen mag, kann dies beispielsweise dadurch geschehen, dass ein Bereich 17 geschaffen wird (angedeutet durch die gestrichelte Abgrenzung gegenüber dem umgebenden Material), in dem die Materialparameter beim Schichtbauverfahren oder bei der Lasersintertechnik anders eingestellt wurden als in der Umgebung, beispielsweise so, dass im Bereich 17 das Material nachgiebiger ist als außerhalb davon. Eine andere, auch verwendbare Technik ist es, im Inneren des Körpers der Sohle 10 Hohlräume 18 zu bilden, die ggf. noch durch Stützen 19 abgestützt sein können. Außer Stützen können auch Funktionselemente wie Federn 40, Dämpfer 41 oder Schienen 42 realisiert werden. Auch im Bereich des Hohlraums 18 wird die Sohle 10 eine andere Nachgiebigkeit haben als jenseits davon. Die Geometrien entsprechend Bereich 17 oder Hohlraum 18 können in Schichtbauverfahren oder Lasersintertechnik durch entsprechende Artsteuerung der Gerätschaften eingestellt werden.

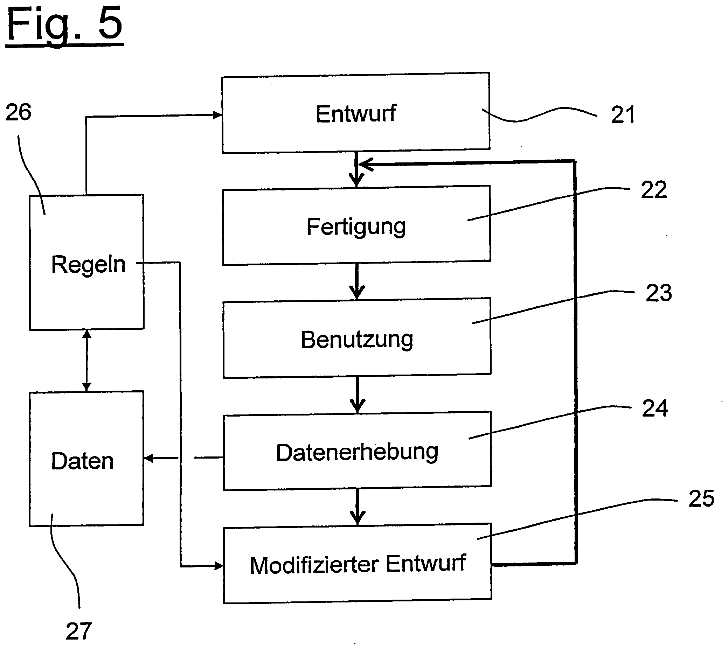

Fig. 5 zeigt ein weiteres Entwurfsverfahren für Sohlen, das in einem Herstellungsverfahren für Sohlen angewendet werden kann. In Schritt 21 werden Entwurfsdaten für eine Sohle erstellt. Dies geschieht nach Maßgabe biometrischer Daten. Es können hier digitale Daten erzeugt werden. Nach Maßgabe dieser Entwurfsdaten werden in Schritt 22 Sohle, Leisten, Oberschuh und dann der ganze Schuh gefertigt. Der Schuh wird dann in Schritt 23 in Benutzung genommen. Nach einer bestimmten Zeit werden Daten bezüglich des in Schritt 22 gefertigten Schuhs erhoben. Nach Maßgabe dieser gewonnenen Daten werden in Schritt 25 modifizierte Entwurfsdaten zu Sohle erstellt, die dann in Schritt 22 abermals zum Fertigen eines Schuhs verwendet werden. Das Verfahren kann iterativ durchlaufen werden. Die Periode des Tragens des Schuhs in Schritt 23 kann vergleichsweise kurz sein (im Extremfall nur eine Testbenutzung) oder vergleichsweise lang (Lebensdauer des Schuhs) oder vorbestimmt (z. B. 6 Monate). In Schritt 24 können Daten bzw. Informationen zum in Schritt 22 gebauten Schuh eingeholt werden. Diese können biometrische Daten umfassen. Es kann auch der getragene Schuh innen und/oder außen vermessen werden. Es können außerdem Angaben des Trägers eingeholt werden. Die in Schritt 24 gewonnenen Daten können ggf. auch mit früher und insbesondere vor dem Schritt 23 eingeholten, entsprechenden Daten verglichen werden, so dass sich insbesondere aus den jeweiligen Unterschieden Hinweise über möglicherweise stattfindende Entwicklungen ergeben. Insbesondere kann der in Schritt 22 gefertigte Schuh nach seiner Fertigung, aber vor dem Tragen in Schritt 23 innen und/oder außen vermessen werden, so dass sich mit der Vermessung nach seiner Benutzung aussagekräftige Daten ergeben.

26 symbolisiert einen Regelsatz, der in einem Rechner hinterlegt sein kann und der zur automatischen Erstellung der Entwürfe von Sohle in den Schritten 25 und ggf. 21 herangezogen wird. 27 symbolisiert einen Datensatz, der die Daten, die im Laufe der Zeit im ggf. auch wiederholt angewendeten Schritt 24 erhoben wurden und auf die die Regeln zurückgreifen. Der Datensatz kann auch die Entwurfsdaten zu Sohle und/oder Leisten und/oder Oberschuh enthalten.

Die in Schritt 24 erhobenen biometrischen Daten können die schon beschriebenen biometrischen Daten aufweisen einschließlich subjektiver Nutzerangaben zum Schuh, seinem Wohlbefinden u. ä.. Es können auch abgeleitete Werte herangezogen werden, insbesondere Unterschiede zu entsprechenden früheren Werten.

Der erste Entwurf in Schritt 21 kann konventioneller Natur sein. Er kann aber auch nach Maßgabe erhobener biometrischer Daten des Schuhträgers erstellt worden sein.

Die bei der Modifikation der Entwurfsdaten einstellbaren Merkmale können grundsätzlich alle Entwurfsgrößen der Sohle und/oder des Leisten und/oder des Oberschuhs sein, insbesondere die schon weiter oben genannten Merkmale.

Mit dem Verfahren der Fig. 5 ergibt sich eine gute Anpassung des Schuhs an den Fuß des jeweiligen Trägers, insbesondere dann, wenn es iterativ und wiederholt eingesetzt wird. Die jeweils erstellten modifizierten Entwurfsdaten können bezugnehmend auf Anwendung, medizinisch-orthopädische Erfordernisse und Komfortwünsche des Trägers gestaltet werden und führen so zu einem Schuh, der gut in die herrschenden Randbedingungen eingepasst werden kann.

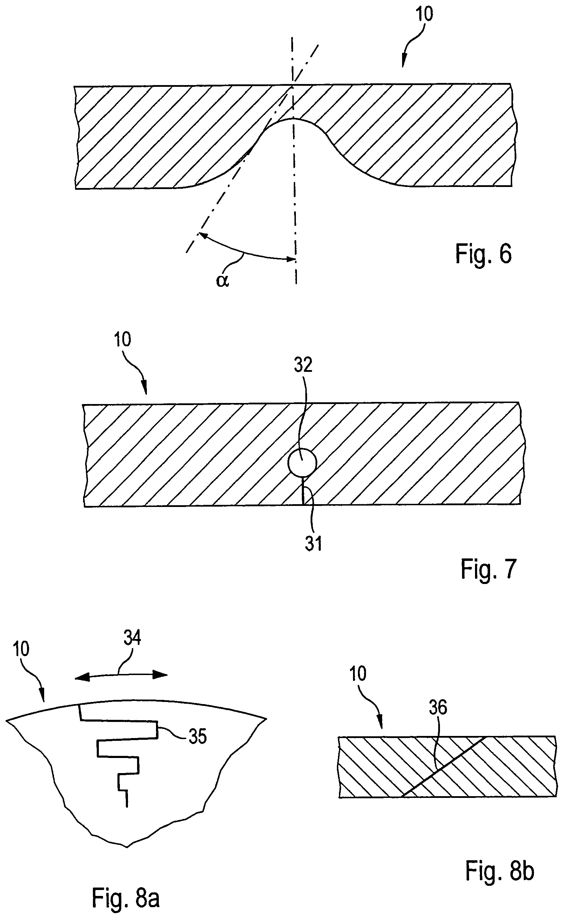

Die Fig. 6 bis 8 zeigen Ausführungsformen für Sohlen bzw. ihre Fertigung, die zusammen mit den bisher beschriebenen Aspekten der Erfindung oder unabhängig davon verwendet werden können.

Fig. 6 zeigt im Querschnitt einen durch eine Materialverjüngung hergestellten nachgiebigen Bereich einer Sohle. Allgemein können nachgiebige Bereiche nach der Erfindung auch durch Materialverjüngungen hergestellt werden. Vorzugsweise haben Materialverjüngungen dabei verrundete Konturen und eine Flankensteilheit α, die immer über 15°, vorzugsweise über 45° liegt. Der Krümmungsradius der Kontur liegt an keinem Ort des Querschnitts unter einem Wert von 2mm, vorzugsweise ist der untere Grenzwert des Krümmungsradiuses 5mm. Mit dieser Gestaltung wird erreicht, dass sich einerseits eine gute Herstellbarkeit ergibt und dass andererseits Kerbspannungen vermieden werden, die insbesondere im Bereich konkaver Kanten zu Rissen und Beschädigungen führen. Der Winkel α ist definiert zwischen jeweiliger Tangente an die Flanke der Materialverjüngung und Lot durch die dünnste Stelle der Materialverjüngung.

Fig. 7 zeigt in Kombination mehrerer Merkmale einer weiteren Ausführungsform der Bildung eines nachgiebigen Bereichs. Sie zeigt abermals den Schnitt durch die Sohle 10. 31 ist ein Einschnitt oder Spalt in das Volumen des Materials der Sohle 10, der von der Oberfläche ausgehend bis in eine bestimmte Tiefe reicht. Der Einschnitt 31 geht nicht durch das gesamte Material hindurch. An der Stelle des Einschnitts 31 hat die Sohle 10 eine geringere Biegesteifigkeit als links und rechts des Einschnitts 31. Beispielsweise kann ein Schlitz oder Einschnitt 31 wie in Fig. 7 gezeigt an der Unterseite einer Sohle 10 in etwa dem Zehenansatz des Trägers folgend quer über die Sohle laufen, so dass der vordere Bereich der Sohle unter den Zehen gegenüber dem hinteren Bereich der Sohle unter dem Fußgewölbe unter der Ferse abknicken kann. Gleichzeitig bilden die Flanken des Einschnitts 31 einen Anschlag, der dafür sorgt, dass die Nachgiebigkeit nicht in jede Biegerichtung in gleicher Weise gegeben ist. So lassen sich in der Ausführungsform der Fig. 7 die jeweiligen Hälften zwar nach oben abbiegen, nicht aber nach unten. Dies kann insbesondere bei Fußballschuhen hilfreich sein, wo es wünschenswert sein kann, den Zehen beim Treten des Fußballs besonderen Halt zu geben.

32 symbolisiert einen optional vorhandenen Hohlraum in Inneren des Körpers der Sohle 10. Das innere Ende des Schlitzes mündet in den Hohlraum 32. Der Hohlraum 32 hat eine verrundete Kontur. Er bewirkt so, dass es keine Kerben und Kanten (konkav) gibt, an denen Kerbspannungen auftreten könnten. Auf diese Weise ist die Gefahr von Rissbildung und Materialfehlern verringert. Der Hohlraum 32 kann sich schlauchartig durch das Material der Sohle 10 entsprechend dem Verlauf des Schnitts 31 ziehen.

Fig. 8 zeigt sogenannte Gleitzonen. Dargestellt ist in Fig. 8a die Draufsicht auf einen Teil der Sohle 10, Fig. 8b zeigt einen Schnitt durch den Körper der Sohle 10. Eine Sohle 10 ist üblicherweise ein Körper, der dreidimensionale Wölbungen aufweist. Bei gleichmäßigen Druckbelastungen führt dies dazu, dass Kräfte in Umfangsrichtung der Wölbung auftreten, in Fig. 8a und 8b sind sie durch Pfeil 34 symbolisiert. Um dem Material an der Peripherie einer Wölbung insoweit eine gewisse Nachgiebigkeit zu verleihen, können Einschnitte 35 oder 36 vorgesehen sein, die sich global auch in radialer Richtung erstrecken. Längs dieser Einschnitte kann das Sohlenmaterial klaffen, so dass es der in Umfangsrichtung wirkenden Kraft 34 nachgeben kann, wenn es gewünscht ist. Fig. 8a zeigt eine Ausführungsform, bei der senkrechte Schnitte durch das Material vorliegen können. Das Material kann längs einer mäandernden Schnittführung 35 aufgeschnitten sein, so dass sich keine groß klaffenden Schlitze ergeben. Fig. 8b zeigt eine Ausführungsform, bei der schräg im Material liegende Schlitze 36 vorgesehen sind, so dass sich auch beim Klaffen der linken und rechten Teile immer noch Teile des Materials überlappen, so dass auch hierbei keine klaffenden Öffnungen entstehen. Diese können zur Begrenzung der maximalen Auslenkung mit einem Anschlag versehen sein.

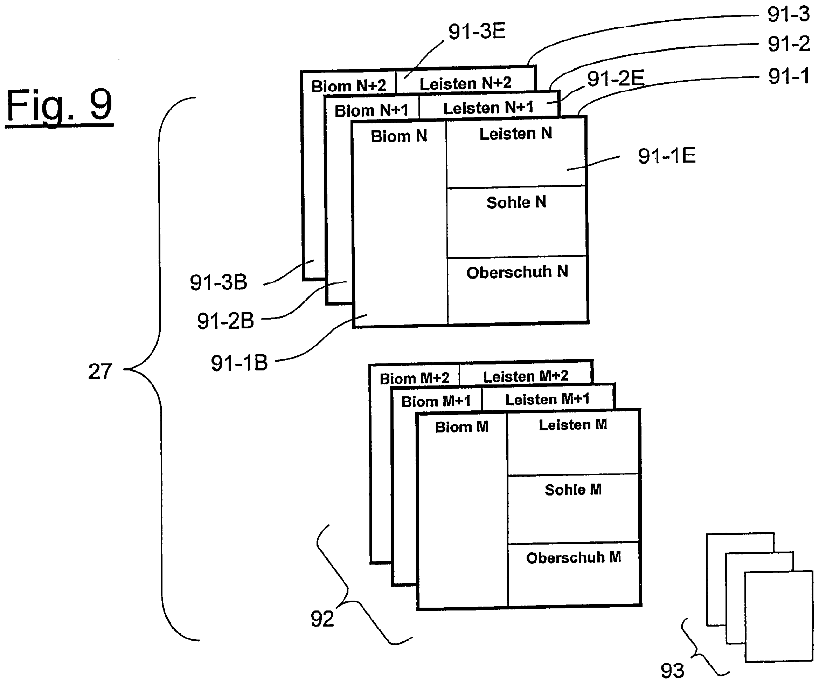

Fig. 9 zeigt ausführlicher die Struktur der im Lauf der Zeit entstehenden Daten, wie sie in Fig. 5 summarisch durch 27 symbolisiert sind. 91 sind Daten zu einer ersten Person, 92 Daten zu einer zweiten, 93 zu einer dritten usw.. Diese Daten sind alle in den Daten 27 enthalten. Wegen der Iterationen im Verfahren der Fig. 5 können zu einer Person mehrere Datensätze 91-1, 91-2, 91-3, usw. entstehen. Es entstehen einerseits viele Sätze biometrischer Daten 91-1B, 91-2B, 91-3B, und zwar sowohl zu einer einzelnen Person als auch über viele Personen hinweg, und andererseits viele Sätze von Entwurfsdaten 91 - 1E, 91-2E, 91-3E zu Sohle und/oder Leisten und/oder Oberschuh, und auch hier wieder sowohl zu einer einzelnen Person als auch über viele Personen hinweg.

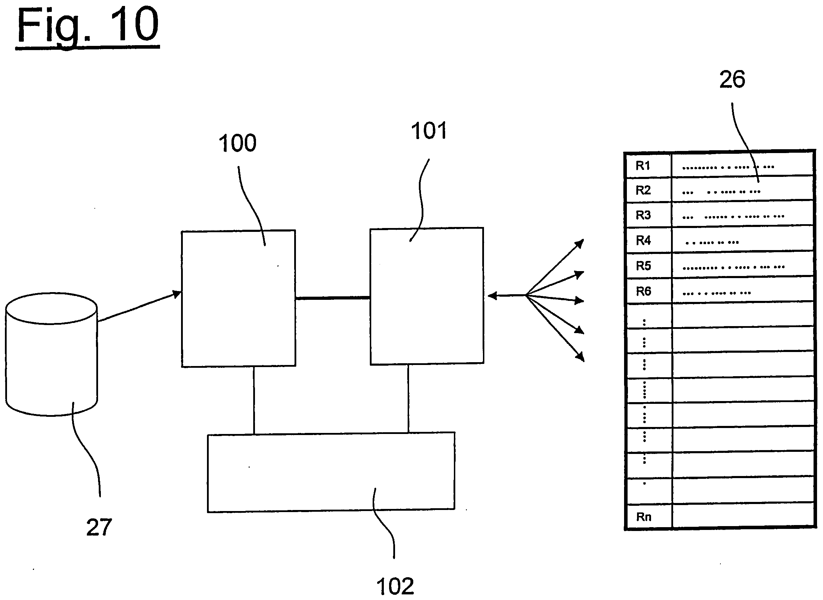

Die Daten im Datensatz 27 können zur Ergänzung oder Modifizierung des Regelsatzes 26 herangezogen werden. Zu diesem Zweck werden die Daten in der Weise durchgegangen, dass in ihnen oder in davon abgeleiteten Daten nach Korrelationen oder Mustern gesucht wird, nach deren Maßgabe neue Regeln formuliert und/oder existierende Regeln modifiziert werden können. Die relativen Häufigkeiten der ermittelten Korrelationen können hierbei bei der Erkennung einer Korrelation oder eines Musters herangezogen werden. Fig. 10 zeigt dies schematisch.

Eine Suchvorrichtung 100 durchsucht die Daten im Datensatz 27 nach Korrelationen oder Mustern. Wenn etwas Signifikantes gefunden wird, wird dies einer Regelverwaltungseinrichtung 101 mitgeteilt, die im Hinblick auf die gefundenen Korrelationen oder Muster die schon existierenden Regeln R1 - Rn im Regelsatz 26 überprüft und entweder existierende Regeln modifiziert oder löscht oder eine oder mehrere neue Regeln hinzufügt. Es kann auch eine Eingabe- und Ausgabeeinrichtung 102 vorgesehen sein, mittels derer die Suchvorrichtung 100 und/oder die Regelverwaltungseinrichtung 101 mit einem Benutzer kommunizieren können.

Ein Beispiel soll das Vorgehen verdeutlichen: Es sei angenommen, dass eine oder mehrere existierende Regeln Rn bei bestimmten biometrischen Eingansdaten in den Entwurfsdaten zum Effekt E führen, dass der Absatz im Vergleich zum Vorderfuß um 2 mm angehoben wird. Es wird weiter angenommen, dass dies bei Personen mit einer bestimmten biometrischen Konstellation K signifikant zu bestimmten kleineren Beschwerden B führt, die bei der Datenerhebung erfasst werden. Wenn die Suchvorrichtung 100 diese Korrelation erkennt (also E in Verbindung mit K und B in als signifikant bewerteter Häufigkeit), kann diese an die Regelverwaltung 101 übergeben werden, die dann eine neue Regel dahingehend formuliert, dass die Regel Rn bei der Konstellation K dahingehend korrigiert wird, dass die Erhöhung nur um 1 mm erfolgt. Bezug nehmend auf die so fortgeschriebenen Regeln können dann die Entwürfe im Schritt 25 der Fig. 5 erstellt werden. Auf diese Weise erhält man ein lernendes System, das die sich in den Daten abbildende Empirie erkennt und mittels fortgeschriebener Regeln abbildet und für die Schuhfertigung verwendet.

Mit den beschriebenen Ausführungsformen ist es möglich, eine Sohle und einen Schuh zu schaffen, die sehr gut an die Bedürfnisse des Trägers unter den unterschiedlichsten Aspekten angepasst sind.

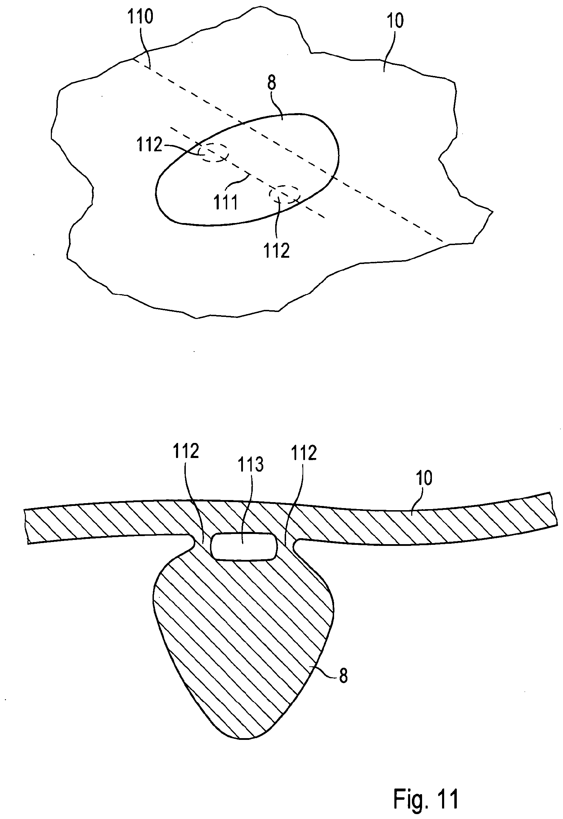

Ein besonderer Entwurfsparameter in den Entwurfsdaten einer Sohle kann die Anbringung der Stollen 8 an der Unterseite der Sohle, insbesondere bei Sohlen von Sportschuhen für Rasensportarten, sein, was Bezug nehmend auf Fig. 11 erläutert wird. Ein Stollen 8 kann über einen oder zwei oder mehrere Ansätze 112 an der Sohlenfläche angeformt sein. Ein Ansatz kann in einer Seitenansicht, und insbesondere in zwei zueinander orthogonal gerichteten Seitenansichten, schmaler sein als die größte seitliche Abmessung des Stollens. Die Ansätze 112 können dann vergleichsweise dünn und insbesondere stielartig ausgebildet sein. Die Stollen 8 behindern dann die Biegsamkeit der Sohle in nur geringerem Ausmaß. Wenn mehrere Ansätze 112 für einen Stollen 8 vorgesehen sind, können diese längs einer Linie 111 parallel (+/- 30°, vorzugsweise +/- 15°), zu einer gewünschten Abknicklinie 110 der Sohle 8 angeordnet sein, selbst wenn eine mögliche Längsrichtung des Stollens in Draufsicht anders ausgerichtet ist. Dadurch ergibt sich eine weitere Verringerung der Beeinträchtigung der Biegsamkeit der Sohle. Bei zwei oder mehreren Ansätzen ergeben sich ein oder mehrere Durchlässe 113 zwischen Sohlenfläche und Stollen 8.

Die genannten Parameter (Anzahl und ggf. Ausrichtungslinie 111 der Ansätze 112) können nach Maßgabe der erhobenen biometrischen Daten oder Zielvorgaben bestimmt werden, also etwa die gewünschte Biegamkeit, eine gewünschte Krafteinleitung vom Stollen in die Sohle oder ähnliches. Die Herstellung der Sohle mit den genannten Stollen kann wie beschrieben erfolgen, insbesondere spanend, Schichtbauweise, Lasersintern, Prototyping.

Nachfolgend wird nochmals auf Fig. 5 Bezug genommen und eine Variante des dort beschriebenen Verfahrens dargestellt. Bei einem oder mehreren Durchläufen der dort gezeigten Schleife, insbesondere im ersten Durchlauf, können im Schritt 21 und/oder im Schritt 25 Entwurfsdaten für eine Einlage für einen Schuh nach Maßgabe biometrischer Daten erstellt werden.

Im Schritt 22 wird eine Einlage nach Maßgabe der Daten gefertigt. Im Schritt 23 wird diese Einlage zusammen mit einem erfindungsgemäßen oder einem sonstigen Schuh benützt. Im Schritt 24 werden zu der benützten Kombination aus Schuh und Einlage Daten, insbesondere biometrische Daten und Daten zur Einlage selbst, eingeholt. Diese Datenerhebung kann eine oder mehrere der folgenden Optionen umfassen:
- Die schon weiter oben genannten biometrischen Daten,
- Testen dieser Einlagen in einem konventionellen Schuh, einem Sportschuh, Laufschuh oder/und Fußballschuh Schuh mit Stollen oder einem anderen Schuh für den Einsatzzweck des späteren individuell hergestellten Schuhs.
- Überprüfen der Einlagenfunktion mit Hilfe von Benutzereindruck und/oder Fußdruckverteilungsmessungen und/oder thermischer Analyse,
- Vermessen bzw. Scannen (zwei- oder dreidimensional) der Einlage,
- Verformungsermittlung einer Einlage.

Im Schritt 25 werden abermals Daten erstellt, die dann modifizierte Entwurfsdaten der Einlage und/oder Entwurfsdaten für eine Sohle und/oder einen Leisten und/oder einen Oberschuh sein können. Mit diesen Entwurfsdaten wird dann im Schritt 22 entsprechend gefertigt. Insbesondere werden im Schritt 21 Entwurfsdaten für eine Einlage und im späteren Schritt 25 Entwurfsdaten für eine Sohle und/oder einen Leisten und/oder einen Oberschuh erstellt. Die Erstellung der Entwurfsdaten der Einlage kann auch Bezug nehmend auf Daten des Schuhs, mit dem zusammen die Einlage verwendet werden soll, erfolgen.

Das Verfahren ist insbesondere anfänglich vorteilhaft, da das Herstellen einer Einlage, auch nach Maßgabe biometrischer Daten, vergleichsweise kostengünstig ist, so dass später die höheren Kosten eines darauf basierenden erfindungsgemäßen Schuhs auf besseren Daten aufbauend entstehen. Die sonstigen Verfahrensoptionen können wie weiter oben beschrieben ausgestaltet sein.

Beim Erstellen von Entwurfsdaten für eine Schuhsohle ausgehend von den Daten einer gefertigten Einlage und von eingeholten Daten zu der Kombination aus Schuh und Einlage kann auf ein Modell oder Regelwerk zurückgegriffen werden, das als Eingangsdaten midestens die Daten der Einlage oder daraus abgeleitete Daten und die erhobenen biometrischen Daten empfängt. Darüberhinaus kann das Modell ggf. auch Daten des Schuhs empfangen, mit dem die Einlage verwendet wurde. Aus diesen Eingangsdaten werden dann über das Modell bzw. Regelwerk die gewünschten Entwurfsdaten für Schuhsohle hergeleitet.

In einer weiteren Variante kann eine Standardeinlage oder eine aus einem Satz vorgegebener Einlagen ausgewählte Einlage zunächst im Schritt 23 benützt werden, und dazu werden dann im Schritt 24 biometrische Daten und Daten zur Einlage selbst eingeholt.

## Patentansprüche

1. Schuhsohle für einen Schuh eines Trägers, die nach Maßgabe individueller biometrischer Daten des Trägers, die dessen Fuß dreidimensional beschreiben, in einer Schichtbau-Prototyping-Maschine hergestellt ist, **dadurch gekennzeichnet, dass** sie einstückig die Brandsohle und die Laufsohle des Schuhs bildet und dass sie Bereiche unterschiedlicher Festigkeiten (11, 12, 13) aufweist.

2. Sohle nach Anspruch 1, **dadurch gekennzeichnet, dass** die Position und/oder Ausrichtung und Verlauf eines oder mehrerer nachgiebiger Bereiche und/oder eines oder mehrerer fester Bereiche nach Maßgabe der biometrischen Daten des Trägers ausgebildet sind.

3. Sohle nach Anspruch 1 oder 2, **dadurch gekennzeichnet, dass** eines oder mehrere der folgenden Merkmale nach Maßgabe der biometrischen Daten des Trägers ausgebildet sind:
- die Profilierung eines nachgiebigen Bereichs,
- das Fußbett,
- Absatzhöhe,
- Anzahl von Stollen und/oder Spikes,
- Position der einzelnen Stollen und/oder Spikes
- Höhe der einzelnen Stollen und/oder Spikes,
- Dämpfung durch die und in der Sohle
- Funktionsweise, Lage, Verlauf Länge und Gestaltung des Schließ- bzw. des Schließbereiches

4. Sohle nach Anspruch 1, 2 oder 3, **dadurch gekennzeichnet, dass** sie durch Lasersintertechnik hergestellt ist.

5. Sohle nach einem oder mehreren der vorherigen Ansprüche, **dadurch gekennzeichnet, daß** sie nach Maßgabe eines oder mehrerer der folgenden biometrischen Daten ausgebildet ist:
- Daten, die vorzugsweise dreidimensional den Fuß oder Teile hiervon und daraus abgeleitete Größen beschreiben,
- Daten, die vorzugsweise dreidimensional das Fußskelett oder Teile hiervon und/oder daraus abgeleitete Größen beschreiben,
- Daten, die Gewicht, Größe und/oder Längenverhältnisse der Beine des Trägers beschreiben,
- Daten, die die Beweglichkeit der Gelenke des Trägers, die Beweglichkeit der Füße und von Teilen der Füße, sowie ihre Stellung in Bezug auf die Beine beschreiben,
- Daten, die Gewicht und Gewichtsverteilung des Trägers über dessen Sohle beschreiben,
- weitere Daten, die die Geh- und/oder Laufweise des Trägers beschreiben,
- Daten, die subjektive und objektive Angaben des Benutzers während der Zeit der Benutzung des bisherigen und früherer Schuhe beschreiben,
- Daten, die gewünschte zukünftige Effekte insbesondere bezüglich der Physis des Schuhträgers widerspiegeln.

6. Verfahren zum Herstellen einer Schuhsohle für einen Träger, **gekennzeichnet durch** die Schritte:
S1: Erfassen biometrischer Daten des Trägers, wobei der Fuß des Trägers dreidimensional erfasst wird,
S2: Erstellen von Entwurfsdaten für die Schuhsohle nach Maßgabe der biometrischen Daten,
S3: Herstellen der Schuhsohle nach einem der vorhergehenden Ansprüche nach Maßgabe der Entwurfsdaten mittels eines Schichtbau-Prototyping-Verfahrens.

7. Verfahren nach Anspruch 6, **dadurch gekennzeichnet, dass** im Schritt S2 Sohlenbereiche mit zueinander unterschiedlichen Festigkeiten vordefiniert werden, indem die Position und/oder Ausrichtung und Verlauf eines oder mehrerer nachgiebiger Bereiche und/oder eines oder mehrerer fester Bereiche nach Maßgabe der biometrischen Daten des Trägers vordefiniert werden.

8. Verfahren nach Anspruch 6 oder 7, wobei im Schritt S2 Entwurfsdaten erzeugt werden, die die Schuhsohle dreidimensional beschreiben.

9. Verfahren nach einem der Ansprüche 6 bis 8, **dadurch gekennzeichnet, dass** im Schritt S3 die Sohle durch Lasersintertechnik, nach Maßgabe der im Schritt S2 erstellten Entwurfsdaten hergestellt wird.

10. Verfahren nach einem der Ansprüche 6 bis 9, **dadurch gekennzeichnet, dass** im Schritt S2 die Entwurfsdaten eines nichtindividuellen Standard-Entwurfs nach Maßgabe der im Schritt S1 erfassten Daten modifiziert werden.

## Claims

1. A shoe sole for a wearer's shoe, which is manufactured in a layered build prototyping machine in accordance with the wearer's individual biometric data, which describes the wearer's foot in three dimensions, **characterised in that**, it integrally forms the insole and the outer sole of the shoe, and **in that** it has regions of different strengths (11, 12, 13).

2. The sole in accordance with claim 1, **characterised in that**, the position and/or orientation and profile of one or a plurality of flexible regions and/or one or a plurality of firm regions are designed in accordance with the wearer's biometric data.

3. The sole in accordance with claim 1 or 2, **characterised in that**, one or a plurality of the following features are designed in accordance with the wearer's biometric data:
- the profiling of a flexible region,
- the footbed,
- heel height,
- number of studs and/or spikes,
- positions of the individual studs and/or spikes
- height of the individual studs and/or spikes
- shock absorption by and in the sole
- mode of operation, position, profile length and configuration of the closure or the closure region

4. The sole in accordance with claims 1, 2 or 3, **characterised in that**, it is manufactured by means of laser-sintering technology.

5. The sole in accordance with one or a plurality of the preceding claims, **characterised in that**, it is designed in accordance with one or a plurality of the following biometric data:
- data that preferably describe in three dimensions the foot, or parts thereof, and sizes derived therefrom,
- data that preferably describe in three dimensions the skeleton of the foot or parts thereof, and/or sizes derived therefrom,
- data that describe the weight, size and/or length proportions of the wearer's legs,
- data that describe the mobility of the wearer's joints, the mobility of the feet and of parts of the feet, and their position in relation to the legs,
- data that describe the wearer's weight and weight distribution over his or her sole,
- other data that describe the wearer's walking and/or running style,
- data that describe subjective and objective details of the user during the period of use of the previous and earlier shoes,
- data that reflect desired future effects, particularly with regard to the wearer's physical condition.

6. A method for the manufacture of a shoe sole for a wearer, **characterised by** the steps:
S1: the recording of biometric data of the wearer, wherein the wearer's foot is recorded three-dimensionally,
S2: the generation of design data for the shoe sole in accordance with the biometric data,
S3: the manufacture of the shoe sole in accordance with one of the preceding claims, in accordance with the design data, using a layered build prototyping method.

7. The method in accordance with claim 6, **characterised in that**, in step S2, sole regions with mutually different strengths are predefined, **in that** the position and/or orientation and profile of one or a plurality of flexible regions and/or one or a plurality of firm regions are predefined in accordance with the wearer's biometric data.

8. The method in accordance with claim 6 or 7, wherein in step S2, design data are generated that describe the shoe sole in three dimensions.

9. The method in accordance with one of the claims 6 to 8, **characterised in that**, in step S3 the sole is manufactured by means of laser-sintering technology in accordance with the design data generated in step S2.

10. The method in accordance with one of the claims 6 to 9, **characterised in that**, in step S2, the design data of a non-individual standard design are modified in accordance with the data recorded in step S1.

## Revendications

1. Semelle de chaussure pour une chaussure d'un porteur, qui est fabriquée dans une machine de prototypage de construction en couches conformément aux données biométriques du porteur, qui décrivent le pied de ce dernier de façon tridimensionnelle, **caractérisée en ce qu'**elle forme en une seule pièce la semelle première et la semelle d'usure de la chaussure et **en ce qu'**elle comporte des zones de résistances différentes (11, 12, 13).

2. Semelle selon la revendication 1, **caractérisée en ce que** la position et/ou l'orientation et le profil d'une ou de plusieurs zones souples et/ou d'une ou plusieurs zones rigides sont constitués conformément aux données du porteur.

3. Semelle selon la revendication 1 ou 2, **caractérisée en ce qu'**une ou plusieurs caractéristiques suivantes sont constituées conformément aux données biométriques du porteur :
- le profilage d'une zone souple,
- l'assise plantaire,
- la hauteur du talon,
- le nombre de crampons et/ou clous,
- la position des crampons et/ou clous individuels,
- la hauteur des crampons et/ou des clous individuels
- amortissement par la semelle et dans la semelle
- mode de fonctionnement, la position, le profil, la longueur et la structure de la fermeture ou zone de fermeture.

4. Semelle selon la revendication 1, 2 ou 3, **caractérisée en ce qu'**elle est fabriquée par technique de frittage au laser.

5. Semelle selon l'une quelconque des revendications précédentes, **caractérisée en ce qu'**elle est constituée conformément à une ou plusieurs des données biométriques suivantes :
- données, qui décrivent de préférence de façon tridimensionnelle le pied ou parties de celui-ci et des grandeurs en découlant,
- données, qui décrivent de préférence de façon tridimensionnelle le squelette du pied ou des parties de celui-ci et/ou des grandeurs en découlant,
- données, qui décrivent le poids, la taille et/ou les rapports de longueur des jambes du porteur,
- données qui décrivent la mobilité des articulations du porteur, la mobilité des pieds et des parties des pieds ainsi que leur position par rapport aux jambes,
- données qui décrivent le poids et la répartition pondérale du porteur sur la semelle de celui-ci,
- autres données, qui décrivent la façon de marcher et/ou de courir du porteur,
- données qui décrivent des indications subjectives et objectives de l'utilisateur pendant la période d'utilisation des chaussures utilisées jusqu'ici et an térieures,
- données qui restituent les effets futurs souhaités notamment concernant le physique du porteur de chaussures.

6. Procédé de fabrication d'une semelle de chaussure pour un porteur, **caractérisé par** les étapes :
S1: saisie des données biométriques du porteur, le pied du porteur étant saisi de façon tridimensionnelle,
S2: établissement des données de conception pour la semelle de chaussure conformément aux données biométriques,
S3: fabrication de la semelle de chaussure selon l'une quelconque des revendications précédentes conformément aux données de projet au moyen d'un procédé de prototypage de construction en couches.

7. Procédé selon la revendication 6, **caractérisé en ce que** dans l'étape S2 des zones de semelle sont prédéfinies avec des résistances différentes les unes par rapport aux autres, la position et/ou l'orientation et le profil d'une ou plusieurs zones souples et/ou d'une ou plusieurs zones fixes étant prédéfinies conformément aux données biométriques du porteur.

8. Procédé selon la revendication 6 ou 7, des données de projet étant produites dans l'étape S2, qui décrivent la semelle de chaussure de façon tridimensionnelle.

9. Procédé selon l'une quelconque des revendications 6 à 8, **caractérisé en ce que** dans l'étape S3, la semelle est fabriquée par la technique de frittage au laser, conformément aux données de conception établies dans l'étape S2.

10. Procédé selon l'une quelconque des revendications 6 à 9, **caractérisé en ce que** dans l'étape S2, les données de projet d'un projet standard non individuel sont modifiées conformément aux données saisies dans l'étape S1.
